# EUROPÄISCHE PATENTSCHRIFT

(11) **EP 3 084 293 B1**
(45) Veröffentlichungstag und Bekanntmachung des Hinweises auf die Patenterteilung: **28.02.2018**
(21) Anmeldenummer: 14815575.7
(22) Anmeldetag: 10.12.2014
(51) Int. Cl.: F21S 8/10

(54) **LEUCHTEINRICHTUNG MIT EINEM LICHLEITER FÜR EINE KFZ-AUSSENBELEUCHTUNG**
LIGHT DEVICE WITH LIGHT GUIDE FOR VEHICLE EXTERIEUR
DISPOSITIF D'ÉCLAIRAGE POUR EXTÉRIEUR DE VÉHICULE COMPORTANT UN GUIDE DE LUMIÈRE

(30) Priorität: 18.12.2013 DE 102013021086
(43) Veröffentlichungstag der Anmeldung: 26.10.2016
(73) Patentinhaber: Audi AG, 85045 Ingolstadt (DE); HELLA GmbH & Co. KGaA, 59552 Lippstadt (DE)
(72) Erfinder: BROSINGER, Manuel, 85080 Gaimersheim (DE); ALPMANN, Linda, 85049 Ingolstadt (DE); STUMPE, Sebastian, 85051 Ingolstadt (DE); GEISTER, Christoph, 59558 Lippstadt (DE); SCHÄFER, Heinrich, 33181 Bad Wünnenberg (DE); BUNGENSTOCK, Carmen, 33165 Kleinenberg (DE); MÜGGE, Martin, 59590 Geseke (DE)
(74) Vertreter: Thielmann, Frank
(86) Internationale Anmeldenummer: PCT/EP2014/003297
(87) Internationale Veröffentlichungsnummer: WO 2015/090535

(56) Entgegenhaltungen:
- EP-A1- 1 835 224
- EP-A1- 2 384 934
- AT-A1- 510 931
- DE-A1-102009 010 507
- DE-U1- 20 020 544
- JP-A- 2012 248 358

## Beschreibung

Die vorliegende Erfindung betrifft eine Leuchteinrichtung für eine Kraftfahrzeugaußenbeleuchtung, wie aus dem gattungsgemäßen Dokument EP 2 384 934 A1 bekannt. Überdies betrifft die vorliegende Erfindung ein Kraftfahrzeug mit einer solchen Leuchteinrichtung. Schließlich betrifft die vorliegende Erfindung ein Verfahren zum Betreiben einer Leuchteinrichtung für eine Kraftfahrzeugaußenbeleuchtung.

In modernen Kraftfahrzeugen können mit Leuchteinrichtungen, die beispielsweise in den Scheinwerfern und/oder den Heckleuchten angeordnet sind, dynamische Lichtfunktionen bereitgestellt werden. Beispielsweise sind von der Anmelderin Fahrtrichtungsanzeiger bekannt, mit denen eine wischende Blinkfunktion erzeugt werden kann. Dabei werden einzelne Lichtquellen oder beleuchtete Flächen nacheinander eingeschaltet, wodurch eine wischende Blinkfunktion entsteht. Darüber hinaus sind Scheinwerfer bekannt, bei denen das Tagfahrlicht und der Fahrtrichtungsanzeiger über die gleiche Optik betrieben werden. Hierzu kann ein Lichtleiter bereitgestellt werden, in den beispielsweise mit zwei Lichtquellen Licht unterschiedlicher Farbe eingekoppelt wird.
Die animierten Lichtfunktionen und die eigentliche Lichtfunktion haben unterschiedliche Anforderungen. Ein Blinklicht oder auch ein Tagfahrlicht muss das Licht exakt in eine bestimmte Richtung aussenden, um die gesetzlichen Werte zu erfüllen. Die wischenden Elemente sollen dagegen in möglichst alle Richtungen homogen abstrahlen, damit es für den Betrachter auffällig wird und dem ästhetischen Anspruch gerecht wird. Aktuell gibt es zudem keine Möglichkeit, die Wischfunktion für die Scheinwerfer auf einem geringen Bauraum bereitzustellen. Des Weiteren sind keine homogenen Beleuchtungsformen bekannt, mit denen vollständig ausgeleuchtete Segmente und zusätzlich ein homogen ausgeleuchtetes Tagfahrlicht und Blinklicht bereitgestellt werden kann.

In diesem Zusammenhang beschreibt die DE 10 2009 058 457 A1 eine Kraftfahrzeugbeleuchtungseinrichtung mit einem Lichtleiter und wenigstens einer ersten Lichtquelle, die Licht einer ersten Farbe erzeugt und in den Lichtleiter einspeist, sowie mit wenigstens einer zweiten Lichtquelle, die Licht einer zweiten Farbe erzeugt und in den Lichtleiter einspeist, wobei der Lichtleiter Lichtauskoppelelemente und eine Lichtabstrahlfläche aufweist. Mit der Kraftfahrzeugbeleuchtungseinrichtung kann die Lichtfunktion des Tagfahrlichts und des Blinklichts bereitgestellt werden. Zudem können die ersten und zweiten Lichtquellen alternativ zueinander eingeschaltet werden.

Zudem beschreibt die DE 10 2005 019 018 A1 eine Leuchte mit wenigstens einem Lichtleiter und mehreren Lichtquellen. Der Lichtleiter weist voneinander beabstandete Lichteintrittsflächen für von den Lichtquellen ausgestrahltes Licht und Lichtaustrittsflächen auf. Die Lichtquellen können jeweils Licht in einer vorbestimmten Farbe ausstrahlen. Damit ist es möglich, in einen einzigen Lichtleiter verschiedenfarbiges Licht einzukoppeln und dieses in unterschiedliche, jeweils vorgegebene Vorzugsrichtungen wieder auszukoppeln.
Darüber hinaus ist aus der DE 10 2009 010 507 A1 eine Beleuchtungseinrichtung für ein Kraftfahrzeug mit mindestens einem ersten Leuchtmittel und einem Lichtleiter bekannt, wobei mindestens eine Stirnfläche des Lichtleiters als Lichteinkoppelfläche für das erste Leuchtmittel dient und wobei quer zu einer Längsachse des Lichtleiters eine Lichtaustrittsfläche vorgesehen ist, an der Lichtstrahlen auskoppeln. Mit der Beleuchtungseinrichtung kann sowohl eine Blinkerfunktion als auch eine Tagfahrlichtfunktion bereitgestellt werden. Es ist Aufgabe der vorliegenden Erfindung, einen Weg aufzuzeigen, wie unterschiedliche Lichtfunktionen einer Leuchteinrichtung für eine Kraftfahrzeugaußenbeleuchtung besonders bauraumsparend bereitgestellt werden können.
Diese Aufgabe wird durch eine Leuchteinrichtung mit den Merkmalen des Patentanspruchs 1 sowie ein Verfahren mit den Merkmalen des Patentanspruchs 6 gelöst. Vorteilhafte Weiterbildungen der vorliegenden Erfindung sind Gegenstand der Unteransprüche.
Die erfindungsgemäße Leuchteinrichtung für eine Kraftfahrzeugaußenbeleuchtung umfasst einen Lichtleiter, der sich entlang einer Längserstreckungsrichtung erstreckt und der zwei Stirnseiten aufweist, zumindest eine erste Lichtquelle zum Einkoppeln von Licht in eine der zwei Stirnseiten des Lichtleiters, eine Mehrzahl von zweiten Lichtquellen zum Einkoppeln von Licht in den Lichtleiter senkrecht zu der Längserstreckungsrichtung des Lichtleiters und eine Steuereinheit zum separaten Ansteuern der zumindest einen ersten Lichtquelle und der Mehrzahl von zweiten Lichtquellen.

Die Leuchteinrichtung umfasst einen Lichtleiter, der sich entlang einer vorbestimmten Erstreckungsrichtung erstreckt. Der Lichtleiter kann auch eine vorbestimme Krümmung aufweisen. Der Lichtleiter kann beispielsweise aus Glas oder aus Kunststoff gefertigt sein. Mit einer ersten Lichtquelle kann Licht in eine Stirnseite des Lichtleiters eingekoppelt werden. Dabei können auch zwei erste Lichtquellen vorgesehen sein, mit denen Licht unterschiedlicher Farbe in eine Stirnseite des Lichtleiters eingekoppelt werden kann. Des Weiteren umfasst die Leuchteinrichtung eine Mehrzahl von zweiten Lichtquellen. Mit den zweiten Lichtquellen kann Licht senkrecht zu der Längserstreckungsrichtung des Lichtleiters in den Lichtleiter eingekoppelt werden. Das Licht der zweiten Lichtquellen kann über eine Außenfläche bzw. Mantelfläche des Lichtleiters in den Lichtleiter eingekoppelt werden. Mit einer Steuereinheit können die zumindest eine erste Lichtquelle und die zweiten Lichtquellen unabhängig voneinander angesteuert, das heißt eingeschaltet und ausgeschaltet werden.

Die Leuchteinrichtung kann beispielsweise für einen Fahrtrichtungsanzeiger und/oder ein Tagfahrlicht eines Scheinwerfers und/oder einer Heckleuchte eines Kraftfahrzeugs verwendet werden. Mit den mehreren zweiten Lichtquellen kann eine dynamische Lichtfunktion bereitgestellt werden. Beispielsweise kann somit ein wischender optischer Effekt erzeugt werden, wenn die zweiten Lichtquellen der Reihe nach eingeschaltet werden. Dadurch, dass mit den zweiten Lichtquellen das Licht senkrecht zur Erstreckungsrichtung des Lichtleiters eingekoppelt wird, entsteht für den Betrachter eine homogene Erscheinung. Durch die zumindest eine erste Lichtquelle wird die Lichtfunktion des Fahrtrichtungsanzeigers und/oder des Tagfahrlichts erzeugt. Der Fokus liegt dabei auf einer gerichteten Ausleuchtung, um die gesetzlichen Anforderungen zu erfüllen. Mit der Leuchteinrichtung, die zumindest eine erste Lichtquelle und mehrere zweite Lichtquellen umfasst, kann eine geschickte bauliche Anordnung bereitgestellt werden, die die getrennten Leuchteinheiten zusammenführt und diese somit als eine Einheit erscheinen. Erfindungsgemäß ist zwischen jeder der Mehrzahl von zweiten Lichtquellen und dem Lichtleiter ein optisches Koppelelement zum Einkoppeln des Lichts der Mehrzahl von zweiten Lichtquellen in den Lichtleiter angeordnet. Die optischen Koppelelemente können beispielsweise aus Glas oder aus Kunststoff gefertigt sein. Jede der zweiten Lichtquellen koppelt Licht in das ihr zugeordnete optische Koppelelement ein. Von dem optischen Koppelelement wird das Licht in den Lichtleiter eingekoppelt. Somit können gezielt unterschiedliche Bereiche des Lichtleiters mit den jeweiligen zweiten Lichtquellen beleuchtet werden. Erfindungsgemäß umgeben die optischen Koppelelemente den Lichtleiter zumindest bereichsweise. Dabei können die optischen Koppelelemente mit dem Lichtleiter in zwei oder mehreren voneinander verschiedenen Bereichen in Kontakt stehen. Somit kann das Licht von den zweiten Lichtquellen besonders homogen in den Lichtleiter eingekoppelt werden.

Erfindungsgemäß ist die Steuereinheit so ausgelegt, zum Bereitstellen einer Funktionalität eines Fahrtrichtungsanzeigers die Mehrzahl von zweiten Lichtquellen entlang der Längserstreckungsrichtung des Lichtleiters der Reihe nach einzuschalten, anschließend die Mehrzahl von zweiten Lichtquellen auszuschalten und anschließend die erste Lichtquelle einzuschalten.

In einer weiteren Ausgestaltung stehen die optischen Koppelelemente mit dem Lichtleiter in Kontakt. Insbesondere sind die optischen Koppelelemente so zu dem Lichtleiter angeordnet, dass zwischen den optischen Koppelelementen und dem Lichtleiter kein Luftspalt vorhanden ist. Somit kann das Licht der zweiten Lichtquellen besonders effektiv in den Lichtleiter eingekoppelt werden.
In einer Ausführungsform erstrecken sich die optischen Koppelelemente jeweils gerade von einer der Mehrzahl der zweiten Lichtquellen zu dem Lichtleiter. Derartige optische Koppelelemente, die beispielsweise die Form eines Quaders oder eines Zylinders aufweisen können, können einfach und kostengünstig gefertigt werden.
In einer weiteren Ausgestaltung weisen die optischen Koppelelemente eine vorbestimmte Krümmung auf. Somit kann eine besonders bauraumsparende Anordnung der zweiten Lichtquellen, der optischen Koppelelemente und des Lichtleiters erreicht werden.

In einer alternativen Ausführungsform sind die optischen Koppelelemente und der Lichtleiter einteilig ausgebildet. Dabei können die optischen Koppelelemente und der Lichtleiter aus dem gleichen Material gefertigt sein. Beispielsweise können die optischen Koppelelemente und der Lichtleiter einteilig mittels eines Spritzgussverfahrens hergestellt werden. Somit kann eine kostengünstige Fertigung der Leuchteinrichtung ermöglicht werden.
Das erfindungsgemäße Kraftfahrzeug umfasst die erfindungsgemäße Leuchteinrichtung, wobei die Leuchteinrichtung in den Scheinwerfern und/oder den Heckleuchten des Kraftfahrzeugs angeordnet ist. Mit der Leuchteinrichtung kann durch den Betrieb der zumindest einen ersten Lichtquelle ein Tagfahrlicht und/oder ein Fahrtrichtungsanzeiger bereitgestellt werden. Durch eine entsprechende Ansteuerung der mehreren zweiten Lichtquellen kann eine dynamische Lichtfunktion, wie beispielsweise ein wischender Blinker, bereitgestellt werden.
Das erfindungsgemäße Verfahren zum Betreiben einer Leuchteinrichtung für eine Kraftfahrzeugaußenbeleuchtung umfasst das Bereitstellen eines Lichtleiters, der sich entlang einer Längserstreckungsrichtung erstreckt und der zwei Stirnseiten aufweist, das Einkoppeln von Licht zumindest einer ersten Lichtquelle in eine der zwei Stirnseiten des Lichtleiters, das Einkoppeln von Licht mit einer Mehrzahl von zweiten Lichtquellen in den Lichtleiter senkrecht zu der Längserstreckungsrichtung des Lichtleiters und das separate Ansteuern der zumindest einen ersten Lichtquelle und der Mehrzahl von zweiten Lichtquellen mit einer Steuereinheit. Erfindungsgemäß werden zunächst die Mehrzahl von zweiten Lichtquellen entlang der Längserstreckungsrichtung des Lichtleiters der Reihe nach eingeschaltet, anschließend die Mehrzahl von Lichtquellen ausgeschaltet und wiederum anschließend die erste Lichtquelle eingeschaltet. Somit kann ein wischender Fahrtrichtungsanzeiger bereitgestellt werden mit dem einerseits durch das Ansteuern der zweiten Lichtquellen eine homogene Abstrahlung erreicht wird und andererseits durch das Ansteuern der zumindest einen ersten Lichtquelle die gesetzlichen Anforderungen bezüglich der Abstrahlung von Licht erreicht werden.
Die zuvor im Zusammenhang mit der erfindungsgemäßen Leuchteinrichtung beschriebenen Vorteile und Weiterbildungen gelten sinngemäß für das erfindungsgemäße Kraftfahrzeug und das erfindungsgemäße Verfahren.
Die vorliegende Erfindung wird nachfolgend anhand der beigefügten Zeichnungen näher erläutert, wobei die Fig.1-7 nicht-erfindungsgemäße Beispiele darstellen. Dabei zeigen:
- Fig. 1: eine nicht-erfindungsgemäße Leuchteinrichtung für eine Kraftfahrzeugaußenbeleuchtung in einer Perspektivansicht;
- Fig. 2: die nicht-erfindungsgemäße Leuchteinrichtung gemäß Fig. 1 in einer geschnittenen Seitenansicht;
- Fig. 3: eine nicht-erfindungsgemäße weitere Ausführungsform einer Leuchteinrichtung in einer Draufsicht;
- Fig. 4: eine nicht-erfindungsgemäße Leuchteinrichtung, bei der optische Koppelelemente und ein Lichtleiter einteilig ausgebildet sind;
- Fig. 5: die nicht-erfindungsgemäße Leuchteinrichtung gemäß Fig. 4 in einer geschnittenen Seitenansicht;
- Fig. 6: eine nicht-erfindungsgemäße Leuchteinrichtung, bei der die optischen Koppelelemente eine vorbestimmte Krümmung aufweisen;
- Fig. 7: eine nicht-erfindungsgemäße Leuchteinrichtung, bei der die optischen Koppelelemente unterhalb des Lichtleiters angeordnet sind;
- Fig. 8: eine Leuchteinrichtung, bei der die optischen Koppelemente rahmenförmig ausgebildet sind; und
- Fig. 9: eine Leuchteinrichtung mit rahmenförmigen optischen Koppelementen in einer weiteren Ausführungsform.

Die nachfolgend näher geschilderten Ausführungsbeispiele stellten bevorzugte Ausführungsformen der vorliegenden Erfindung dar.

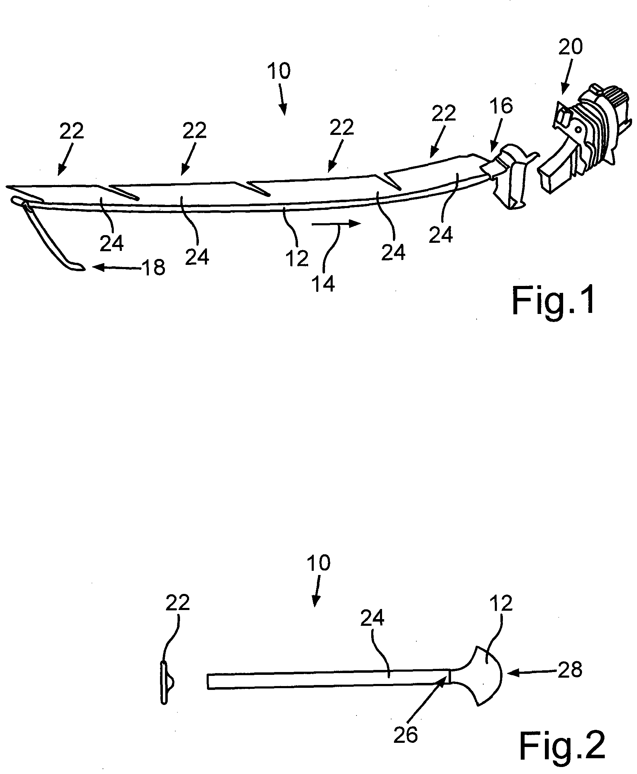

Fig. 1 zeigt eine Leuchteinrichtung 10 für eine Kraftfahrzeugaußenbeleuchtung in einer Perspektivansicht. Die Leuchteinrichtung 10 kann beispielsweise in den Frontscheinwerfern und/oder den Heckleuchten eines Kraftfahrzeugs verwendet werden. Die Leuchteinrichtung 10 umfasst einen Lichtleiter 12, der beispielsweise aus Glas oder aus Kunststoff gefertigt sein kann. Der Lichtleiter 12 erstreckt sich entlang seiner Längserstreckungsrichtung 14. Der Lichtleiter 12 weist eine erste Stirnseite 16 und eine zweite Stirnseite 18 auf. Zudem umfasst die Leuchteinrichtung 10 eine erste Lichtquelle 20, mit der Licht in die erste Stirnseite 16 eingekoppelt werden kann. An der zweiten Stirnseite 18 kann ein entsprechendes Reflektorelement zum Reflektieren des Lichts angeordnet sein. Dabei können auch zwei erste Lichtquellen 20 vorgesehen sein, mit denen Licht unterschiedlicher Farbe in die erste Stirnseite 16 des Lichtleiters 12 eingekoppelt werden kann. Beispielsweise kann mit zwei ersten Lichtquelle 20 sowohl weißes Licht als auch gelbes Licht in den Lichtleiter 12 eingekoppelt werden.

Darüber hinaus umfasst die Leuchteinrichtung 10 eine Mehrzahl von zweiten Lichtquellen 22. In dem vorliegenden Ausführungsbeispiel umfasst die Leuchteinrichtung 10 vier zweite Lichtquellen 22. Zwischen den zweiten Lichtquellen 22 und dem Lichtleiter 12 ist jeweils ein optisches Koppelelement 24 angeordnet. Mit den zweiten Lichtquellen 22 kann über die optischen Koppelelemente 24 Licht senkrecht zur Erstreckungsrichtung 14 des Lichtleiters 12 in den Lichtleiter eingekoppelt werden.

Fig. 2 zeigt die Leuchteinrichtung 10 gemäß Fig. 1 in einer geschnittenen Seitenansicht. Dabei ist zu erkennen, dass die optischen Koppelelemente 24 direkt mit dem Lichtleiter 12 in Kontakt stehen. In dem vorliegenden Ausführungsbeispiel weist der Lichtleiter 12 eine Lichteinkoppelfläche 26 auf. Die Lichteintrittsfläche 26 des Lichtleiters 12 steht in direktem Kontakt mit dem optischen Koppelelement 24. Somit kann das Licht der zweiten Lichtquelle 22 besonders effektiv über das optische Koppelelement 24 in den Lichtleiter 12 eingekoppelt werden. Des Weiteren weist der Lichtleiter 12 eine Lichtaustrittsfläche 28 auf, an der das Licht von dem Lichtleiter 12 nach außen austreten kann.

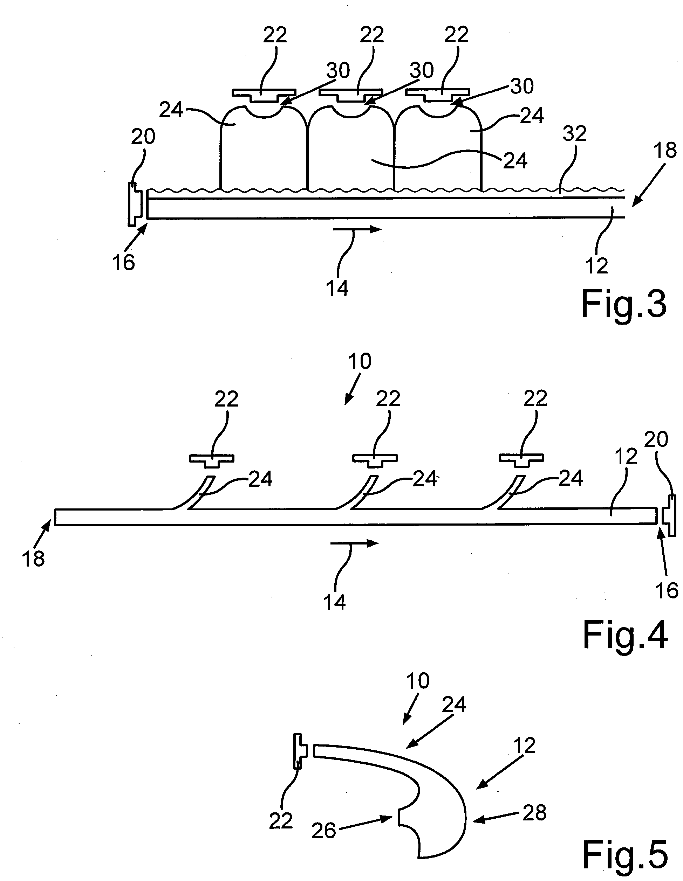

Fig. 3 zeigt eine weitere Ausführungsform einer Leuchteinrichtung 10 in einer Draufsicht. Die optischen Koppelelemente 24 weisen jeweils eine Aussparung 30 auf, durch die begünstigt wird, dass das Licht der zweiten Lichtquellen 22 in die jeweiligen optischen Koppelelemente 24 eingekoppelt werden kann. Des Weiteren ist zwischen dem optischen Koppelelement 24 und dem Lichtleiter 12 ein Verbindungselement 32 angeordnet. Durch das Verbindungselement 32 kann der Kontakt zwischen den optischen Koppelelementen 24 und dem Lichtleiter 12 hergestellt werden. Das Verbindungselement 32 kann beispielsweise durch einen Klebstoff oder einen entsprechenden Kunststoff bereitgestellt werden.

Fig. 4 zeigt eine weitere Ausgestaltung einer Leuchteinrichtung 10 für eine Kraftfahrzeugaußenbeleuchtung in einer Draufsicht. Hierbei weisen die optischen Koppelelemente 24 eine vorbestimmte Krümmung auf. Zudem sind die optischen Koppelelemente 24 einteilig mit dem Lichtleiter 12 ausgebildet. Dies ist insbesondere in Fig. 5 zu erkennen, die eine geschnittene Seitenansicht der Leuchteinrichtung 10 gemäß Fig. 4 zeigt. Die optischen Koppelelemente 24 und der Lichtleiter 12 können beispielsweise aus Kunststoff gefertigt sein und mittels eines Spritzgussverfahrens einteilig hergestellt werden.

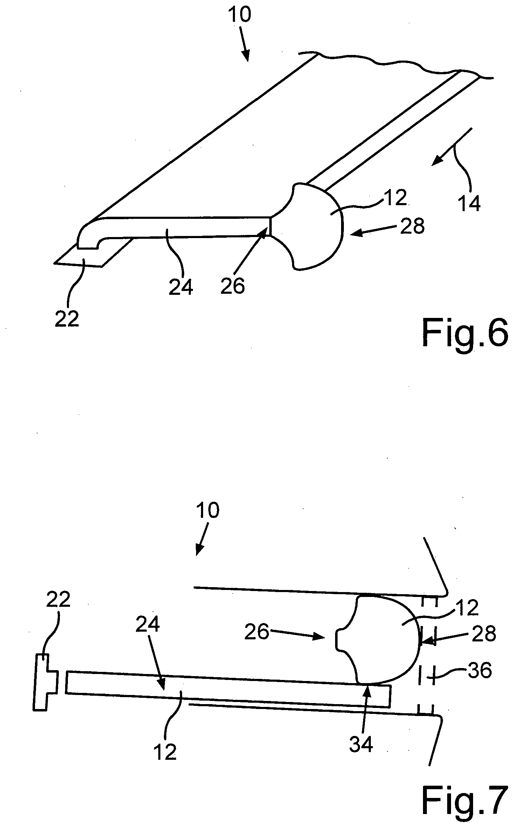

Fig. 6 zeigt eine weitere Ausgestaltung einer Leuchteinrichtung 10 in einer Perspektivansicht. In dem vorliegenden Ausführungsbeispiel steht das optische Koppelelement 24 mit der Lichteintrittsfläche 26 des Lichtleiters 12 in Kontakt. Somit kann eine besonders bauraumsparende Anordnung der Leuchteinrichtung 10 ermöglicht werden.

Fig. 7 zeigt eine weitere Ausgestaltung einer Leuchteinrichtung 10 für eine Kraftfahrzeugaußenbeleuchtung in einer geschnittenen Seitenansicht. Hierbei ist das optische Koppelelement 24 gerade ausgeführt. Das optische Koppelelement 24 steht mit dem Lichtleiter 12 an einer unteren Fläche 34 des Lichtleiters 12 mit diesem in Kontakt. Zusätzlich umfasst die Leuchteinrichtung 10 eine Zusatzscheibe 36, die vor der Abstrahlfläche 28 des Lichtleiters 12 angeordnet ist. Die Zusatzscheibe 36 kann abnehmbar ausgebildet sein. Durch die Zusatzscheibe 36 kann eine lichtdurchlässige Blende als Zusatzteil bereitgestellt werden.

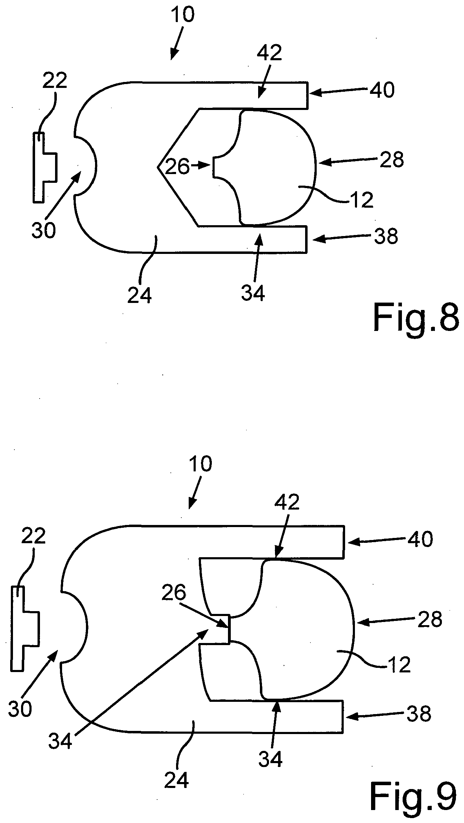

Fig. 8 zeigt eine weitere Ausführungsform einer Leuchteinrichtung 10 in einer geschnittenen Seitenansicht. Dabei ist das optische Koppelelement 24 rahmenförmig ausgebildet. Das optische Koppelelement 24 umgibt den Lichtleiter 12 zumindest bereichsweise. Ein unterer Schenkel 38 des optischen Koppelelements 24 steht mit dem unteren Bereich 34 des Lichtleiters 12 in Kontakt und ein oberer Schenkel 40 steht mit einem oberen Bereich 42 des Lichtleiters 12 in Kontakt. Somit kann der Lichtleiter 12 ins rahmenförmige optische Koppelelement 24 eingespannt werden.

Fig. 9 zeigt eine weitere Ausgestaltung einer Leuchteinrichtung 10 in einer geschnittenen Seitenansicht. Dabei ist das optische Koppelelement 24 wie in dem Ausführungsbeispiel gemäß Fig. 8 rahmenförmig ausgebildet. Zudem weist das optische Koppelelement 24 einen mittleren Steg 44 auf, der mit der Lichteintrittsfläche 26 des Lichtleiters 12 in Kontakt steht.

Die Leuchteinrichtung 10 kann in den Scheinwerfern und/oder den Heckleuchten eines Kraftfahrzeugs eingesetzt werden. Dabei kann mit der Leuchteinrichtung 10 sowohl die Funktionalität eines Tagfahrlichts als auch eines Fahrtrichtungsanzeigers bereitgestellt werden. Um ein Tagfahrlicht bereitzustellen, kann mit der ersten Lichtquelle 20 kontinuierlich Licht in den Lichtleiter 12 eingekoppelt werden. Dabei kann beispielsweise weißes Licht mit der ersten Lichtquelle 20 in den Lichtleiter 12 eingekoppelt werden. Wenn die Funktionalität eines Fahrtrichtungsanzeigers bereitgestellt werden soll, können die zweiten Lichtquellen 22 entlang der Erstreckungsrichtung 14 des Lichtleiters 12 der Reihe nach mit einer hier nicht dargestellten Steuereinheit eingeschaltet werden. Anschließend daran können die zweiten Lichtquellen 22 ausgeschaltet werden und die erste Lichtquelle 20 eingeschaltet werden. Somit kann die Funktionalität eines wischenden Blinkers bereitgestellt werden.

## Patentansprüche

1. Leuchteinrichtung (10) für eine Kraftfahrzeugaußenbeleuchtung mit
- einem Lichtleiter (12), der sich entlang einer Längserstreckungsrichtung (14) erstreckt und der zwei Stirnseiten (16, 18) aufweist,
- zumindest einer ersten Lichtquelle (20) zum Einkoppeln von Licht in eine der zwei Stirnseiten (16, 18) des Lichtleiters (12),
- einer Mehrzahl von zweiten Lichtquellen (22) zum Einkoppeln von Licht in den Lichtleiter (12) senkrecht zu der Längserstreckungsrichtung (14) des Lichtleiters (12), wobei
- zwischen jeder der Mehrzahl von zweiten Lichtquellen (22) und dem Lichtleiter (12) ein optisches Koppelelement (24) zum Einkoppeln des Lichts der Mehrzahl von zweiten Lichtquellen (22) in den Lichtleiter (12) angeordnet ist und
- einer Steuereinheit zum separaten Ansteuern der zumindest einen ersten Lichtquelle (20) und der Mehrzahl von zweiten Lichtquellen (22),
**dadurch gekennzeichnet, dass**
- die optischen Koppelelemente (24) den Lichtleiter (12) zumindest bereichsweise umgeben und
- die Steuereinheit dazu ausgelegt ist, zum Bereitstellen einer Funktionalität eines Fahrtrichtungsanzeigers die Mehrzahl von zweiten Lichtquellen (22) entlang der Längserstreckungsrichtung (14) des Lichtleiters (12) der Reihe nach einzuschalten, anschließend die Mehrzahl von zweiten Lichtquellen (22) auszuschalten und anschließend die erste Lichtquelle (20) einzuschalten.

2. Leuchteinrichtung (10) nach Anspruch 1,
**dadurch gekennzeichnet, dass**
die optischen Koppelelemente (24) mit dem Lichtleiter (12) in Kontakt stehen.

3. Leuchteinrichtung (10) nach Anspruch 1 oder 2,
**dadurch gekennzeichnet, dass**
sich die optischen Koppelelemente (24) jeweils gerade von einer der Mehrzahl von zweiten Lichtquellen (22) zu dem Lichtleiter (12) erstrecken.

4. Leuchteinrichtung (10) nach Anspruch 1 oder 2,
**dadurch gekennzeichnet, dass**
die optischen Koppelelemente (24) eine vorbestimmte Krümmung aufweisen.

5. Kraftfahrzeug mit einer Leuchteinrichtung (10) nach einem der vorhergehenden Ansprüche, wobei die Leuchteinrichtung (10) in den Scheinwerfern und/oder den Heckleuchten des Kraftfahrzeugs angeordnet sind.

6. Verfahren zum Betreiben einer Leuchteinrichtung (10) für eine Kraftfahrzeugaußenbeleuchtung durch
- Bereitstellen eines Lichtleiters (12), der sich entlang einer Längserstreckungsrichtung (14) erstreckt und der zwei Stirnseiten (16, 18) aufweist,
- Einkoppeln von Licht zumindest einer ersten Lichtquelle (20) in eine der zwei Stirnseiten (16, 18) des Lichtleiters (12),
- Einkoppeln von Licht mit einer Mehrzahl von zweiten Lichtquellen (22) in den Lichtleiter (12) senkrecht zu der Längserstreckungsrichtung (14) des Lichtleiters (12), wobei zwischen jeder der Mehrzahl von zweiten Lichtquellen (22) und dem Lichtleiter (12) ein optisches Koppelelement (24) zum Einkoppeln des Lichts der Mehrzahl von zweiten Lichtquellen (22) in den Lichtleiter (12) angeordnet ist, und
- separates Ansteuern der zumindest einen ersten Lichtquelle (20) und der Mehrzahl von zweiten Lichtquellen (22) mit einer Steuereinheit,
**dadurch gekennzeichnet, dass**
- die optischen Koppelelemente (24) den Lichtleiter (12) zumindest bereichsweise umgeben und
- zum Bereitstellen einer Funktionalität eines Fahrtrichtungsanzeigers die Mehrzahl von zweiten Lichtquellen (22) entlang der Längserstreckungsrichtung (14) des Lichtleiters (12) der Reihe nach eingeschaltet werden, anschließend die Mehrzahl von zweiten Lichtquellen (22) ausgeschaltet werden und anschließend die erste Lichtquelle (20) eingeschaltet wird.

## Claims

1. A lighting device (10) for a motor vehicle exterior light with
- a light guide (12) extending along a direction of longitudinal extension (14) and with two end faces (16, 18),
- at least a first light source (20) for coupling light into one of the two end faces (16, 18) of the light guide (12),
- a plurality of second light sources (22) for coupling light into the light guide (12) perpendicular to the direction of longitudinal extension (14) of the light guide (12), wherein
- an optical coupling-in element (24) is arranged between each of the plurality of second light sources (22) and the light guide (12) for coupling the light from the plurality of second light sources (22) into the light guide (12) and
- a control unit for separate activation of at least one of the first light sources (20) and the plurality of second light sources (22),
**characterised in that**
- the optical coupling-in elements (24) surround the light guide (12) at least in areas and
- the control unit is designed such that, to provide a functionality of a direction indicator the plurality of second light sources (22) are switched on in sequence along the direction of longitudinal extension (14) of the light guide (12), then the plurality of second light sources (22) are switched off and then the first light source (20) is switched on.

2. A lighting device (10) according to claim 1,
**characterised in that**
the optical coupling-in elements (24) are in contact with the light guide (12).

3. A lighting device (10) according to claim 1 or 2,
**characterised in that**
the optical coupling-in elements (24) each extend straight from of the plurality of second light sources (22) to the light guide (12).

4. A lighting device (10) according to claim 1 or 2,
**characterised in that**
the optical coupling-in elements (24) have a predetermined curve.

5. A motor vehicle with a lighting device (10) according to any of the previous claims, wherein the lighting devices (10) are arranged in the headlights and/or tail lights of the motor vehicle.

6. A method for operating a lighting device (10) for a motor vehicle exterior light comprising
- the provision of a light guide (12), which extends along a longitudinal extension direction (14) and which has two end faces (16, 18),
- the coupling of light from at least one first light source (20) into one of the two end faces (16, 18) of the light guide (12),
- the coupling of light with a plurality of second light sources (22) into the light guide (12) perpendicular to the direction of longitudinal extension (14) of the light guide (12), wherein an optical coupling-in element (24) is arranged between each of the plurality of second light sources (22) and the light guide (12) for coupling the light from the plurality of second light sources (22) into the light guide (12), and
- separate activation of at least one first light source (20) and the plurality of second light sources (22) with a control unit,
**characterised in that**
- the optical coupling-in elements (24) surround the light guide (12) at least in areas and
- to provide a functionality of a direction indicator the plurality of second light sources (22) are switched on in sequence along the direction of longitudinal extension (14) of the light guide (12), then the plurality of second light sources (22) are switched off and then the first light source (20) is switched on.

## Revendications

1. Dispositif d'éclairage (10) pour un éclairage externe de véhicule automobile comprenant :
- un guide de lumière (12), qui s'étend le long d'une direction d'extension longitudinale (14) et présente deux faces avant (16, 18),
- au moins une première source de lumière (20) pour injecter de la lumière dans l'une des deux faces avant (16, 18) du guide de lumière (12),
- une pluralité de secondes sources de lumière (22) pour injecter de la lumière dans le guide de lumière (12) perpendiculairement à la direction d'extension longitudinale (14) du guide de lumière (12), dans lequel :
- on agence entre chacune de la pluralité de secondes sources de lumière (22) et le guide de lumière (12) un élément de couplage optique (24) pour injecter la lumière de la pluralité de secondes sources de lumière (22) dans le guide de lumière (12) et
- une unité de commande pour commander séparément la au moins une première source de lumière (20) et la pluralité de secondes sources de lumière (22),
**caractérisé en ce que** :
- les éléments de couplage optique (24) entourent le guide de lumière (12) au moins par zones et
- l'unité de commande est conçue pour, lors de la mise en oeuvre d'une fonctionnalité d'un clignotant, connecter la pluralité de secondes sources de lumière (22) le long du dispositif d'extension longitudinale (14) du guide de lumière (12) dans l'ordre, puis déconnecter la pluralité de secondes sources de lumière (22) et connecter ensuite la première source de lumière (20).

2. Dispositif d'éclairage (10) selon la revendication 1,
**caractérisé en ce que** :
les éléments de couplage optique (24) sont en contact avec le guide de lumière (12).

3. Dispositif d'éclairage (10) selon la revendication 1 ou 2,
**caractérisé en ce que** :
les éléments de couplage optique (24) s'étendent respectivement directement de l'une de la pluralité de secondes sources de lumière (22) au guide de lumière (12).

4. Dispositif d'éclairage (10) selon la revendication 1 ou 2,
**caractérisé en ce que** :
les éléments de couplage optique (24) présentent une courbure prédéterminée.

5. Véhicule automobile équipé d'un dispositif d'éclairage (10) selon l'une quelconque des revendications précédentes, dans lequel le dispositif d'éclairage (10) est agencé dans les projecteurs et/ou les feux arrière du véhicule automobile.

6. Procédé de fonctionnement d'un dispositif d'éclairage (10) pour un éclairage externe de véhicule automobile par :
- mise en oeuvre d'un guide de lumière (12) qui s'étend le long d'une direction d'extension longitudinale (14) et présente deux faces avant (16, 18),
- injection de lumière d'au moins une première source de lumière (20) dans l'une des deux faces avant (16, 18) du guide de lumière (12),
- injection de lumière avec une pluralité de secondes sources de lumière (22) dans le guide de lumière (12) perpendiculairement à la direction d'extension longitudinale (14) du guide de lumière (12), dans lequel on agence entre chacune de la pluralité de secondes sources de lumière (22) et le guide de lumière (12) un élément de couplage optique (24) pour injecter la lumière de la pluralité de secondes sources de lumière (22) dans le guide de lumière (12) et
- commande séparée de la au moins une première source de lumière (20) et de la pluralité de secondes sources de lumière (22) avec une unité de commande,
**caractérisé en ce que** :
- les éléments de couplage optique (24) entourent le guide de lumière (12) au moins par zones et,
- pour mettre en oeuvre une fonctionnalité d'un clignotant, la pluralité de secondes sources de lumière (22) est connectée le long de la direction d'extension longitudinale (14) du guide de lumière (12) dans l'ordre, puis la pluralité de secondes sources de lumière (22) est déconnectée et, ensuite, la première source de lumière (20) est connectée.
